(19) Europäisches Patentamt
European Patent Office
Office européen des brevets

(11) Veröffentlichungsnummer: **0 134 193**
**B1**

(12) # EUROPÄISCHE PATENTSCHRIFT

(45) Veröffentlichungstag der Patentschrift: **13.01.88**

(51) Int. Cl.⁴: **C 09 B 62/503**, C 09 B 62/20, D 06 P 3/66

(21) Anmeldenummer: **84810360.2**

(22) Anmeldetag: **23.07.84**

(54) **Reaktivfarbstoffe, deren Herstellung und Verwendung.**

(30) Priorität: **29.07.83 CH 4170/83**

(43) Veröffentlichungstag der Anmeldung: **13.03.85 Patentblatt 85/11**

(45) Bekanntmachung des Hinweises auf die Patenterteilung: **13.01.88 Patentblatt 88/2**

(84) Benannte Vertragsstaaten: **CH DE FR GB IT LI**

(56) Entgegenhaltungen:
**EP-A-0 064 314**
**DE-A-3 113 473**

(73) Patentinhaber: **CIBA- GEIGY AG, Klybeckstrasse 141, CH- 4002 Basel (CH)**

(72) Erfinder: **Tzikas, Athanassios, Dr., Muttenzerstrasse 78, CH- 4133 Pratteln (CH)**

**EP 0 134 193 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere inbezug auf die Applikation, aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen. Sie sollen ferner eine hohe Reaktivität besitzen, so dass nur kurze Verweilzeiten erforderlich sind, und sie sollen insbesondere Färbungen mit hohen Fixiergraden liefern. Von bekannten Farbstoffen werden diese Anforderungen nur in ungenügendem Masse erfüllt.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen bireaktiven Farbstoffen die gestellte Aufgabe gelöst wird.

Gegenstand der Erfindung sind Reaktivfarbstoffe der Formel

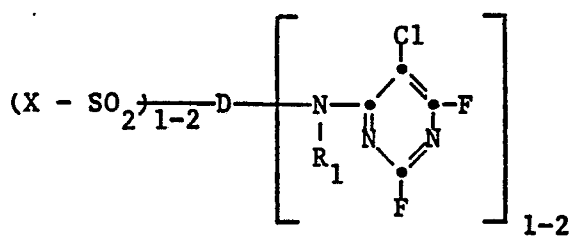

(1) ,

worin D der Rest eines sekundären Disazofarbstoffes oder eines daraus abgeleiteten Metallkomplexazofarbstoffes, $R_1$ Wasserstoff oder ein gegebenenfalls substituierter $C_{1-4}$-Alkylrest, und X die Vinyl-, ß-Sulfatoäthyl-, ß-Thiosulfatoäthyl-, ß-Chloräthyl- oder ß-Acetoxyäthyl-Gruppe ist.

Der Rest D in Formel (1) kann in der üblichen Weise substituiert sein. Als Beispiele für weitere Substituenten am Rest D seien genannt Alkylgruppen mit 1 bis 4 Kohlenstoffatomen, wie Methyl, Äthyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Äthylamino, Propylamino, Isopropylamino oder Butylamino, Phenylamino, N,N-Di-ß-hydroxyäthylamino, N,N-Di-ß-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Äthoxycarbonyl, Alkylsulfonyl mit 1 bis 4 Kohlenstoffatomen, wie Methylsulfonyl oder Äthylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Propylsulfamoyl, N-Isopropylsulfamoyl oder N-Butylsulfamoyl, N-(4-Hydroxyäthyl)-sulfamoyl, N,N-Di-(ß-hydroxyäthyl)-sulfamoyl, N-Phenylsulfamoyl, Ureido, Hydroxy, Carboxy, Sulfomethyl oder Sulfo. Vorzugsweise enthält der Rest D eine oder mehrere Sulfonsäuregruppen. Die Reaktivfarbstoffe der Formel (1) enthalten als Substituenten vor allem Methyl, Äthyl, Methoxy, Äthoxy, Acetylamino, Benzoylamino, Amino, Chlor, Brom, Ureido, Hydroxy, Carboxy, Sulfomethyl oder Sulfo.

Der Rest $R_1$ ist falls es sich um einen Alkylrest handelt, geradkettig oder verzweigt; er kann weitersubstituiert sein, z. B. durch Halogen, Hydroxy, Cyan, $C_{1-4}$-Alkoxy, Carboxy oder Sulfo. Als Beispiele für $R_1$ und $R_2$ seien die folgenden Reste genannt: Methyl, Äthyl, Propyl, Isopropyl, Butyl, Isobutyl, sek.-Butyl, tert.-Butyl, Carboxymethyl, ß-Carboxyäthyl, ß-Carboxypropyl, Methoxycarbonylmethyl, Äthoxycarbonylmethyl, ß-Methoxyäthyl, ß-Aethoxyäthyl, ß-Methoxypropyl, ß-Chloräthyl, γ-Brompropyl, ß-Hydroxyäthyl, ß-Hydroxybutyl, ß-Cyanäthyl, Sulfomethyl, ß-Sulfoäthyl, Aminosulfonylmethyl und ß-Sulfatoäthyl. Vorzugsweise ist $R_1$ Wasserstoff, Methyl oder Äthyl.

Die Reaktivreste, d. h. der Vinyl- oder ß-Sulfatoäthyl- etc. -sulfonylrest und der 2,4-Difluor-5-chlorpyrimidylrest sind an verschiedene oder an gleiche Reste von Ausgangskomponenten, nämlich Diazo- und Kupplungskomponenten, gebunden. Die Reaktivfarbstoffe haben dann z. B. die Formel

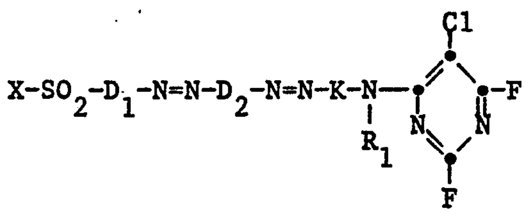 (1a),

worin

$R_1$ und X die unter Formel (1) angegebenen Bedeutungen haben, und $D_1$ und $D_2$ der Rest je einer Diazokomponente, und K der Rest einer Kupplungskomponente ist. Falls zwei $X-SO_2$-Reaktivreste vorhanden sind, so sind diese insbesondere an den Rest einer Diazokomponente gebunden; und für den Fall, dass das Farbstoffmolekül zwei 2,4-Difluor-5-chlorpyrimidylreste enthält, befinden sich diese vorzugsweise in der Kupplungskomponente. Es sind somit, entsprechend den Indizes, welche den Reaktivresten in Formel (1) angefügt sind, auch tri- und tetrareaktive Farbstoffe in Betracht zu ziehen. Die obigen Erläuterungen gelten sinngemäss auch für Metallkomplexazofarbstoffe.

In Betracht zu ziehen sind ferner auch Reaktivfarbstoffe der Formel (1) worin einer der Reaktivreste oder beide über einen Rest der Formel

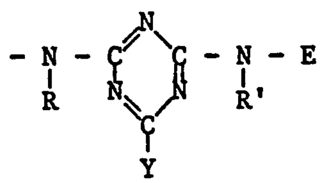 (1b)

an den Chromophor gebunden sind. Dabei ist der Rest $X-SO_2$- bzw. der 2,4- Difluor-5-chlorpyrimidylaminorest an E gebunden; E ist ein gegebenenfalls substituiertes aliphatisches oder aromatisches Brückenglied. Das Brückenglied E ist vorzugsweise ein Alkylen- oder Arylenrest. So kann E ein langer (z. B. mit 10 oder mehr Kohlenstoffatomen) oder kürzerer, geradkettiger oder verzweigter Alkylenrest sein; insbesondere kommt ein Alkylenrest mit 2 bis 6 Kohlenstoffatomen in Betracht, z. B. Äthylen, Propylen, Butylen, Hexylen oder Cyclohexylen. Als Arylenrest ist E z. B. ein Naphthylenrest, der Rest eines Diphenyls oder Stilbens oder insbesondere ein Phenylenrest. Der Rest E kann weitere Substituenten enthalten, z. B. Halogenatome, wie Fluor, Chlor und Brom, Alkylgruppen mit 1 bis 4 Kohlenstoffatomen, wie Methyl, Äthyl und Propyl, Alkoxygruppen mit 1 bis 4 Kohlenstoffatomen, wie Methoxy, Äthoxy, Propyloxy und Isopropyloxy, Carboxy oder Sulfo. R und R′ sind unabhängig voneinander Wasserstoff oder ein gegebenenfalls substituierter $C_{1-4}$-Alkylrest; und Y ist ein Halogenatom, eine gegebenenfalls substituierte Aminogruppe, Hydroxy, eine Alkoxy-, Aryloxy-, Alkylthio- oder Arylthiogruppe.

Bevorzugt sind:

Reaktivfarbstoffe der Formel

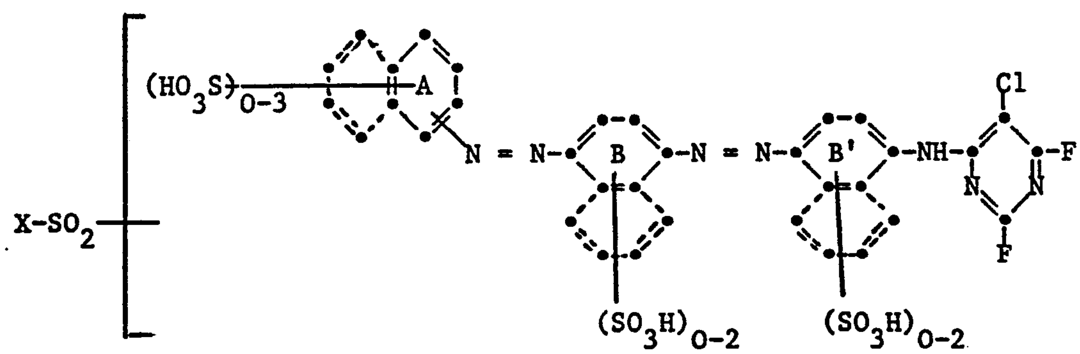

(2),

worin X die unter Formel (1) angegebene Bedeutung hat, und die Benzol- bzw. Naphthalinringe A, B und B′ unabhängig voneinander gegebenenfalls weitersubstituiert sind.

Bevorzugt sind weiterhin Reaktivfarbstoffe der Formel (2), worin die Benzolringe A und B bzw. B′ nicht weitersubstituiert sind, und/oder worin X die Vinyl- oder ß-Sulfatoäthyl-Gruppe ist.

Das Verfahren zur Herstellung der Reaktivfarbstoffe der Formel (1) ist dadurch gekennzeichnet, dass man Farbstoffe der Formel

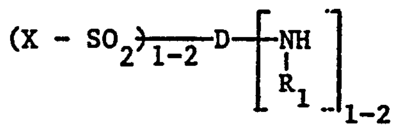 (3),

worin D, $R_1$ und X die unter Formel (1) angegebenen Bedeutungen haben, oder ihre Vorprodukte mit 2,4,6-Trifluor-5-chlorpyrimidin zu Reaktivfarbstoffen der Formel (1) umsetzt, oder die erhaltenen Zwischenprodukte in die gewünschten Endfarbstoffe überführt, und gegebenenfalls eine weitere Umwandlungsreaktion anschliesst.

Man geht somit von Farbstoffen aus, die eine X-$SO_2$-Gruppe bereits enthalten, und acyliert die Gruppe -$N(R_1)H$ mit 2,4,6-Trifluor-5-chlorpyrimidin; oder man verwendet entsprechende Vorprodukte, z. B. eine Diazokomponente der Formel

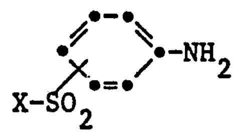 (4),

und kuppelt diese auf eine Kupplungskomponente, welche eine Gruppe -$N(R_1)H$ enthält, und acyliert die Gruppe -$N(R_1)H$ vor oder nach der Kupplung mit 2,4,6-Trifluor-5-chlorpyrimidin. Bei der oben beschriebenen Ausführungsform kann die acylierbare Gruppe -$N(R_1)H$ auch in der Diazokomponente vorhanden sein, und dementsprechend die X-$SO_2$-Gruppe in der Kupplungskomponente. Man verwendet in diesem Falle als Diazokomponenten vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino- oder Nitroverbindungen, worin die Acetylamino- bzw- Nitrogruppe vor der Kondensation mit dem 2,4,6-Trifluor-5-chlorpyrimidin durch Verseifen bzw. Reduzieren in die $H_2N$-Gruppe übergeführt wird. Die Stellung der Reaktivreste im fertigen Azofarbstoff ist somit nicht unveränderlich an bestimmte Ausgangskomponenten - Diazo- oder Kupplungskomponenten - gebunden.

Ferner können die beiden Reaktivreste auch an ein und dieselbe Komponente gebunden sein, beispielsweise indem man eine nichtfaserreaktive Diazokomponente sowie eine Kupplungskomponente der Formel

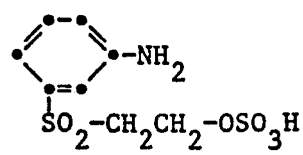 (5)

verwendet, und die -$NH_2$ Gruppe nach der Kupplung mit 2,4,6-Trifluor-5-chlorpyrimidin acyliert.

Eine andere vorteilhafte Methode besteht darin, zunächst einen Farbstoff herzustellen, der eine Vorstufe des Reaktivrestes enthält, und diese nachträglich in die Endstufe umzuwandeln, z. B. durch Veresterung oder eine Additionsreaktion. Beispielsweise kann man einen Farbstoff der Formel (3), worin X ein Rest HO-$CH_2CH_2$- ist, herstellen und das Zwischenprodukt vor oder nach der Acylierung mit Schwefelsäure umsetzen, so dass die Hydroxygruppe in die Sulfatogruppe überführt wird; oder man verwendet einen analogen Farbstoff, worin X die Vinylgruppe $H_2C{=}CH$- ist, und lagert an das Zwischenprodukt Thioschwefelsäure an, wobei ein Rest $HO_3SS$-$CH_2CH_2$-entsteht. Die Sulfatierung der Hydroxygruppe in einem Farbstoff der Formel (3) oder einem geeigneten Vorprodukt, erfolgt z. B. durch Umsetzung mit konzentrierter Schwefelsäure bei 0°C bis mässig erhöhter Temperatur. Die Sulfatierung kann auch durch Reaktion der Hydroxyverbindung mit 2 Äquivalenten Chlorsulfonsäure pro Hydroxygruppe in einem polaren organischen Lösungsmittel, wie beispielsweise N-Methylpyrrolidon, bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C. Die Einführung eines anderen unter alkalischen Bedingungen abspaltbaren Restes für X in eine Verbindung der Formel (1) oder ein Zwischenprodukt anstelle der Sulfatogruppe, beispielsweise einer Thiosulfatogruppe erfolgt in an sich bekannter Weise.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit säureabspaltenden Mitteln, wie Natriumhydroxid, behandeln, wobei die Sulfatoäthylsulfonylreste in Vinylsulfonylreste übergehen.

Der oben beschriebene Weg der Herstellung über eine Zwischenstufe des Reaktivrestes geht in vielen Fällen einheitlich und vollständig.

Liegen in den hergestellten Reaktivfarbstoffen zur Metallkomplexbildung befähigte Gruppen vor, können die Reaktivfarbstoffe auch nachträglich metallisiert werden.

Da die einzelnen oben angegebenen Verfahrensschritte in unterschiedlicher Reihefolge ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen

Reaktionskomponenten vorteilhafterweise sich nach den besonderen Bedingungen richtet. Da unter bestimmten Voraussetzungen Hydrolyse des 2,4-Difluor-5-chlorpyrimidylrestes eintritt, muss ein Zwischenprodukt, welches Acetylaminogruppen enthält, zwecks Abspaltung der Acetylgruppen verseift werden, bevor mit einem 2,4,6-Trifluor-5-chlorpyrimidin kondensiert wird. Welche Teilreaktion zweckmässigerweise zuerst ausgeführt wird, ist von Fall zu Fall verschieden und richtet sich vor allem nach der Löslichkeit der beteiligten Aminoverbindungen und der Basizität der zu acylierenden Aminogruppen. Die Acylierung der Farbstoffe der Formel (3) oder der Farbstoffvorprodukte mit 2,4,6-Trifluor-5-chlorpyrimidin erfolgt nach an sich bekannten Methoden, vorzugsweise in wässriger Lösung oder Suspension und in Gegenwart von alkalischen, säurebindenden Mitteln, z. B. wässriger Alkalihydroxide, -carbonate oder -bicarbonate.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

Als Farbstoffe der Formel (3) kommen besonders Farbstoffe der folgenden Strukturtypen in Betracht:

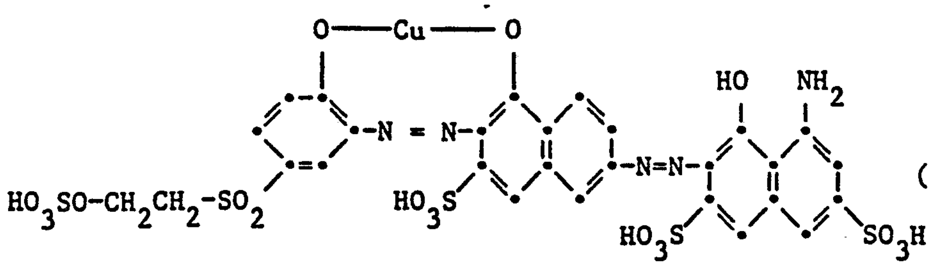

(6a)

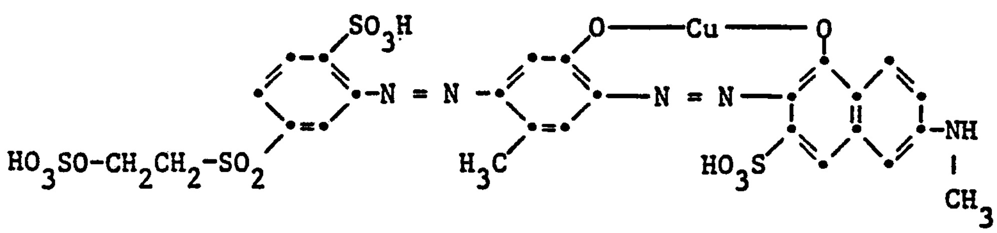

(6b)

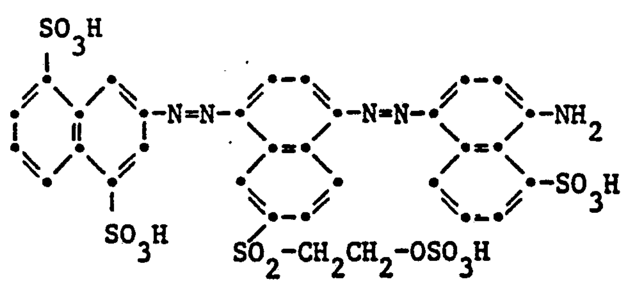

(6c)

Geht man zur Herstellung der Reaktivfarbstoffe der Formel (1) nicht von den fertigen Aminofarbstoffen, z. B. solchen die weiter vorn beschrieben sind, sondern von Farbstoffvorprodukten, d.h. den Diazo- und Kupplungskomponenten aus, muss eine der beiden Komponenten mindestens eine acylierbare Aminogruppe und die andere mindestens eine Gruppe X-$SO_2$- aufweisen. Als Diazokomponenten kommen vorwiegend geeignete Verbindungen aus der Aminobenzol- und Aminonaphthalinreihe in Betracht, beispielsweise solche, die in den Azofarbstoffen der oben angegebenen Formeln enthalten sind, wie 1,3-Diamino-benzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Di-amino-2-methyl-5-methoxybenzol, 1,4-Diamino-2,5-dimethoxybenzol, 1,4-Diamino-2,5-diäthoxybenzol, 2,6-Diaminonaphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxy-benzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-amino-benzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diamino-2-methylbenzol, 4,4'-Diaminodiphenyloxid, 4,4'-Diaminodiphenyl-harnstoff-2,2'-disulfonsäure, 4,4'-Diaminodiphenyloxyäthan-2,2'-disulfonsäure, 4,4'-Diaminostilben-2,2'-disulfonsäure, 4,4'-Diaminodiphenyl-äthan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5- aminomethylbenzol-6-sulfonsäure, 1,3,5-Triaminobenzol.

Aromatische Amine, die als Diazokomponenten zur Herstellung der Mono- oder Disazofarbstoffe dienen können, und die eine Gruppe der Formel $X\text{-}SO_2$- ein- oder zweimal gebunden enthalten, sind z. B.:

1-Amino-4-ß-sulfatoäthylsulfonylbenzol, 1-Amino-4-ß-thiosulfatoäthyl-sulfonylbenzol, 1-Amino-4-vinylsulfonylbenzol, 1-Amino-4-ß-chloräthyl-sulfonylbenzol, 1-Amino-3-ß-sulfatoäthylsulfonylbenzol, 1-Amino-3-vinyl-sulfonylbenzol, 1-Amino-2-methoxy-5-ß-sulfatoäthylsulfonylbenzol, 1-Amino-2-methoxy-5-ß-thiosulfatoäthylsulfonylbenzol, 1-Amino-2-methoxy-5-vinylsulfonylbenzol, 1-Amino-4-methoxy-3-ß-sulfatoäthylsulfonylbenzol, 1-Amino-4-methoxy-3-ß-vinylsulfonylbenzol, 1-Amino-2,5-dimethoxy-4-ß-sulfatoäthylsulfonylbenzol, 1-Amino-2,5-dimethoxy-4-vinylsulfonylbenzol, 1-Amino-2-methoxy-4-ß-sulfatoäthylsulfonyl-5-methylbenzol, 1-Amino-2- methoxy-4-vinylsulfonyl-5-methylbenzol, 1-Amino-3-ß-sulfatoäthylsulfonyl-6-carboxybenzol, 1-Amino-3-vinylsulfonyl-6-carboxybenzol, 1-Amino-4-ß-sulfatoäthylsulfonylbenzol-2-sulfonsäure, 1-Amino-4-vinylsulfonylbenzol-2-sulfonsäure, 1-Amino-5-vinylsulfonylbenzol-2,4-disulfonsäure, 1-Amino-2-hydroxy-5-ß-sulfatoäthylsulfonylbenzol, 1-Amino-2-hydroxy-4-ß-sulfatoäthylsulfonylbenzol, 1-Amino-2-hydroxy-5-ß-sulfatoäthylsulfonylbenzol-3-sulfonsäure, 1-Amino-2-brom-4-ß-sulfatoäthylsulfonylbenzol, 1-Amino-2,6-dichlor-4-ß-sulfatoäthylsulfonylbenzol, 1-Amino-2,4-di-(ß-sulfatoäthylsulfonyl)-benzol, 1-Amino-2,4-di-(ß-sulfatoäthylsulfonyl)-5-chlorbenzol, 1-Amino-2,4-di-(ß-thiosulfatoäthylsulfonyl)-5-chlorbenzol, 1-Amino-2,4- di-(vinylsulfonyl)-benzol, 1-Amino-2,4-di-(vinylsulfonyl)-5-chlorbenzol, 1-Amino-2,4-di-(ß-acetoxyäthylsulfonyl)-benzol, 1-Amino-2,4-di-(ß-acetoxy-äthylsulfonyl)-5-chlorbenzol, 2-Amino-8-ß-sulfatoäthylsulfonylnaphthalin, 2-Amino-6-ß-sulfatoäthylsulfonylnaphthalin, 2-Amino-6ß-sulfatoäthylsulfonylnaphthalin-1-sulfonsäure, 2-Amino-8-ß-sulfatoäthylsulfonylnaphthalin-6-sulfonsäure, 2-Amino-6,8-di-(ß-sulfatoäthylsulfonyl)-naphthalin.

Ferner sind zu erwähnen die entsprechenden ß-Hydroxy-verbindungen, welche als Vorprodukte verwendet werden können, z. B.: 1-Amino-4-ß-hydroxyäthylsulfonylbenzol, 1-Amino-3-ß-hydroxyäthylsulfonylbenzol, 1-Amino-2,4-di- (ß-hydroxyäthylsulfonyl)-benzol und 1-Amino-2,4-di-(ß-hydroxyäthylsulfonyl)-5-chlorbenzol.

Wenn als Diazokomponente statt eines Diamins eine Amino-acetylamino-verbindung eingesetzt werden soll, aus welcher nachträglich die Acetylgruppe durch Verseifen wieder abgespalten wird, wie dies oben bei der Erläuterung des Verfahrens erwähnt ist, kommen die Monoacetylverbindungen der oben genannten Diazokomponenten in Frage, z. B. 1-Acetylamino-3-aminobenzol-4-sulfonsäure oder 1-Acetylamino-4-aminobenzol-3-sulfonsäure.

Die Kupplungskomponenten sind vor allem geeignete Verbindungen der Aminobenzol- und Naphthalinreihe, z. B. Aniline, N-mono-substituierte Aniline, m-Phenylendiaminderivate, Aminonaphthaline, Naphthole, Aminonaphthalinsulfonsäure, Naphtholsulfonsäuren oder Aminonaphtholsulfonsäuren, ferner Pyrazolone, Aminopyrazole, Aminopyridine, Hydroxypyridine/pyridone, Aminopyrimidine, Hydroxypyrimidine, Indole, Barbitursäurederivate oder Acetoacetarylide. Als Beispiele seien genannt:

1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxy-naphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 2-Amino-5-hydroxynaphthalin-7-sulfonsäure, 2-Methyl- bzw. 2-Aethylamino-5-hydroxynaphthalin-7-sulfonsäure, 2-Amino- 5-hydroxynaphthalin-1,7-disulfonsäure, 2-Amino-8-hydroxynaphthalin-6- sulfonsäure, 2-Methyl- bzw. 2-Aethylamino-8-hydroxynaphthalin-6-sulfonsäure, 2-Amino-8-hydroxynaphthalin-3,6-disulfonsäure, 1-Amino-5-hydroxynaphthalin-7-sulfonsäure, 1-Amino-8-hydroxynapthalin-3,6-bzw. -4,6-disulfonsäure, 1-(4'-Aminobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 1-Amino-8-hydroxynaphthalin-4-sulfonsäure, 2,4,6-Triamino-3-cyanpyridin, 1-ß-Aminoäthyl-3-cyan-4-methyl-6-hydroxypyridon-(2), 1-γ-Aminopropyl-3- sulfomethyl-4-methyl-6-hydroxypyridon-(2), 1,3-Diaminobenzol, 1-Amino-3- (N,N-di-ß-hydroxyäthylamino)-benzol, 1-Amino-3-(N,N-di-ß-sulfatoäthylamino)-benzol, 1-Amino-3-(N,N-di-ß-hydroxyäthylamino)-4-methoxy-benzol, 1-Amino-3-(N,N-di-ß-sulfatoäthylamino)-4-methoxybenzol, 1-Amino-3-sulfo-benzylaminobenzol, 1-Amino-3-sulfo-benzylamino-4-chlorbenzol, 1-Amino-3-(N,N-di-sulfobenzylamino)-benzol, 1-(3'-Aminophenyl)-3-methyl-5-pyrazolon sowie 1-(Aminophenyl)-3-carboxy-5-pyrazolone, die im Phenylkern durch Chlor, Methyl, Methoxy, Nitro oder Sulfo substituiert sein können, wie 1-(2'-Sulfo-4'-aminophenyl)-3-carboxy-pyrazolon-(5).

Falls eine der beiden Komponenten beide Reaktivgruppen zugleich enthält, oder diese in die betreffende Komponente eingeführt werden können, wie bei den Kupplungskomponenten der Formeln

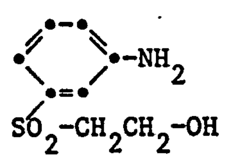 (7a) und 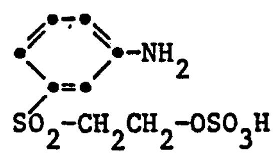 (7b)

kann die andere Komponente, in diesem Falle die Diazokomponente, auch nichtreaktiv sein, Beispiele sind: Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 2-Aminodiphenyläther, 1-Aminobenzol-2-, -3- oder -4-sulfonsäureamid, 1-Aminobenzol-2-, -3- oder -4-carbonsäure, Dehydrothio-p-toluidin-sulfonsäure, 1-Amino-3-trifluor-methylbenzol-6-sulfonsäure, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3-oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino- 2,5-dichlorbenzol-4-sulfonsäure, 1-Amino-4-methyl-5-chlorbenzol-4-sulfonsäure, 1-Amino-4-methyl-5-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1-Amino- 2,4-dimethoxybenzol-6-sulfonsäure, 1-Amino-2,5-dimethoxybenzol-6-sulfon-säure, 1-Amino-2,5-dimethoxybenzol-4-sulfonsäure, 1-Amino-3-acetylamino-benzol-6-sulfonsäure, 1-Amino-4-acetylaminobenzol-2-sulfonsäure, 1-Amino- 3-acetylamino-4-methylbenzol-6-sulfonsäure, 2-Amino-1-methylbenzol-3,5-disulfonsäure, 1-Amino-4-methoxybenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder -8-sulfonsäure, 2-Aminonaphthalin-3,6- oder -5,7-disulfonsäure, 1-Aminonaphthalin-3,6- oder -5,7- disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin- 1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylamino-benzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphtha-lin-6-sulfonsäure, 2-Amino-1-hydroxynaphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure.

Die Diazotierung der eine diazotierbare Aminogruppe enthaltenden Zwischenprodukte erfolgt in der Regel durch Einwirkung salpetriger Säure in wässrig-mineralsaurer Lösung bei tiefer Temperatur, die Kupplung bei schwach sauren, neutralen bis schwach alkalischen pH-Werten.

Die Kondensation des 2,4,6-Trifluor-5-chlorpyrimidins mit den Diazokomponenten oder den Kupplungskomponenten bzw. mit acylierbaren Monoazo- oder Disazo-Zwischenprodukten bzw. mit den aminogruppenhaltigen Farbstoffen der Formel (3) oder deren Vorprodukten erfolgen vorzugsweise in wässriger Lösung oder Suspension, bei niedriger Temperatur und bei schwach saurem, neutralem bis schwach alkalischem pH-Wert. Vorteilhaft wird der bei der Kondensation freiwerdende Fluorwasserstoff laufend durch Zugabe wässriger Alkalihydroxyde, -carbonate oder -bicarbonate neutralisiert.

Die Reaktivfarbstoffe der Formel (1) sind faserreaktiv. Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z. B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten

Anteile können leicht ausgewaschen werden, wobei die Differenz zwischen Ausziehgrad und Fixiergrad bemerkenswert klein, d. h. der Seifverlust sehr gering ist. Die Reaktivfarbstoffe der Formel (1) eignen sich auch zum Druck, vor allem auf Baumwolle, ebenso aber auch zum Bedrucken von stickstoffhaltigen Fasern, z. B. von Wolle, Seide oder Wolle enthaltenden Mischgeweben.

Die mit den erfindungsgemässen Farbstoffen hergestellten Färbungen und Drucke zeichnen sich durch klare Nuancen aus. Insbesondere besitzen die Färbungen und Drucke auf Cellulosefasermaterialien eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Aus der DE-A-31 13 473 ist ein marineblauer Disazofarbstoff bekannt, der Sulfatoäthylsulfonyl und 2,4-Difluor-5-chlorpyrimidyl-(6) als Reaktivreste aufweist. Dieser gehört einer anderen Klasse von Azofarbstoffen an als die erfindungsgemässen Farbstoffe.

Die nachfolgenden Beispiele dienen zur Erläuterung der Erfindung. Die Temperaturen sind in Celsiusgraden angegeben. Die Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

**Beispiel**

30,3 Teile 2-Naphthylamin-4,8-disulfonsäure werden in 400 Volumenteilen Eiswasser suspendiert. Es werden 25 Gewichtsteile conc. Salzsäure zugefügt und mit 20 Volumenteilen 5n-Natriumnitrit diazotiert. Es wird noch 1 Stunde bei 0 bis 5°C nachgerührt und dann überschüssige salpetrige Säure mit wenig Amidosulfonsäure zerstört. Dann werden 33,1 Teile 1-Naphthylamin- 6-ß-sulfatoäthylsulfon zugegeben und durch Natriumacetat wird der pH-Wert langsam auf 4,5 erhöht. Bei diesem pH-Wert wird noch 2 Stunden bei 10 bis 15°C nachgerührt, bis keine freie Diazoniumverbindung mehr nachweisbar ist. Dann wird wieder auf 0 bis 5°C abgekühlt, 35 Teiler einer conc. Salzsäure und anschliessend 22 Volumenteile einer 5n-Natriumnitritlösung zugefügt. Es wird 1 Stunde bei 0 bis 5°C nachgerührt und dann wenig Amidosulfonsäure zugegeben.

In die Lösung werden dann 22,5 Teile 1-Naphthylamin-8-sulfonsäure eingetragen und mit etwa 15 Teilen Soda ein pH-Wert von 4 bis 5 eingestellt und gehalten, wobei 2 Stunden nachgerührt wird. Die Farbstofflösung wird dann auf pH 5,5 bis 6,0 gestellt und auf 10°C abgekühlt. Bei dieser Temperatur und bei diesem pH-Wert lässt man 15 Teile 2,4,6-Trifluor-5-chlorpyrimidin zutropfen und dann 1 Stunde nachrühren, wobei der pH-Wert von 5,5 bis 6,0 gehalten wird. Der Farbstoff wird mit Kalium- und Natriumchlorid aus der Lösung isoliert.

Nach dem Trocknen bei 40 bis 50°C und Mahlen erhält man ein schwarzes Farbstoffpulver, das das Alkalimetallsalz der Verbindung der Formel

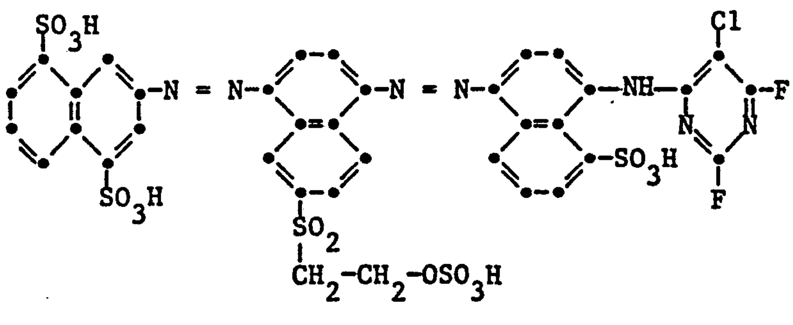

enthält. Diese Verbindung besitzt sehr gute Farbstoffeigenschaften und färbt Baumwolle und Wolle nach den üblichen Färbe- und Druckmethoden für Reaktivfarbstoffe in braunen Tönen mit sehr guten Nassechtheitseigenschaften.

**Färbevorschrift I**

2 Teile des gemäss Beispiel erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

**Färbevorschrift II**

2 Teile des gemäss Beispiel erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

**Färbevorschrift III**

8 Teile des gemäss Beispiel erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

**Färbevorschrift IV**

4 Teile des gemäss Beispiel erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

**Färbevorschrift V**

6 Teile des gemäss Beispiel erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

**Färbevorschrift VI**

2 Teile des gemäss Beispiel erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20°C Warmen Lösung, die pro Liter 4 g Natriumhydroxyd und 300 g Natriumchlorid enthält, quetscht auf 75 % Gewichtszunahme ab, dämpft die Färbung während 30 Sekunden bei 100 bis 102°C, spült, seift während einer Viertelstunde in einer 0,3 %igen kochenden Lösung eines nichtionogenen Waschmittels, spült und trocknet.

**Druckvorschrift I**

3 Teile des gemäss Beispiel erhaltenen Reaktivfarbstoffes werden unter schnellem Rühren in 100 Teile einer Stammverdickung, enthaltend 50 Teile 5 %-ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

**Druckvorschrift II**

5 Teile des gemäss Beispiel erhaltenen Reaktivfarbstoffes werden unter schnellem Rühren in 100 Teile einer Stammverdickung, enthaltend 50 Teile 5 %-ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

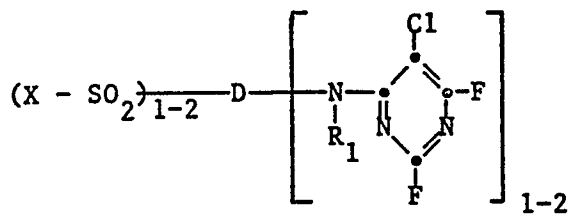

(1) ,

worin D der Rest eines sekundären Disazofarbstoffes oder eines daraus abgeleiteten Metallkomplexazofarbstoffes, $R_1$ Wasserstoff oder ein gegebenenfalls substituierter $C_{1-4}$-Alkylrest, und X die Vinyl-, ß-Sulfatoäthyl-, ß-Thiosulfatoäthyl-, ß-Chloräthyl- oder ß-Acetoxyäthyl- Gruppe ist.

2. Reaktivfarbstoffe gemäss Anspruch 1, der Formel

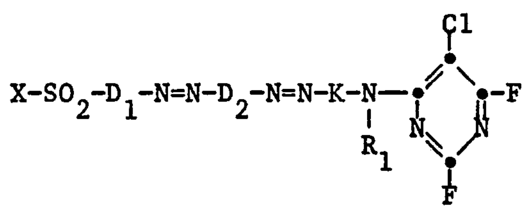

(1a) ,

worin $R_1$ und X die in Anspruch 1 angegebenen Bedeutungen haben, und $D_1$ und $D_2$ der Rest je einer Diazokomponente, und K der Rest einer Kupplungskomponente ist.

3. Reaktivfarbstoffe gemäss Anspruch 2, der Formel

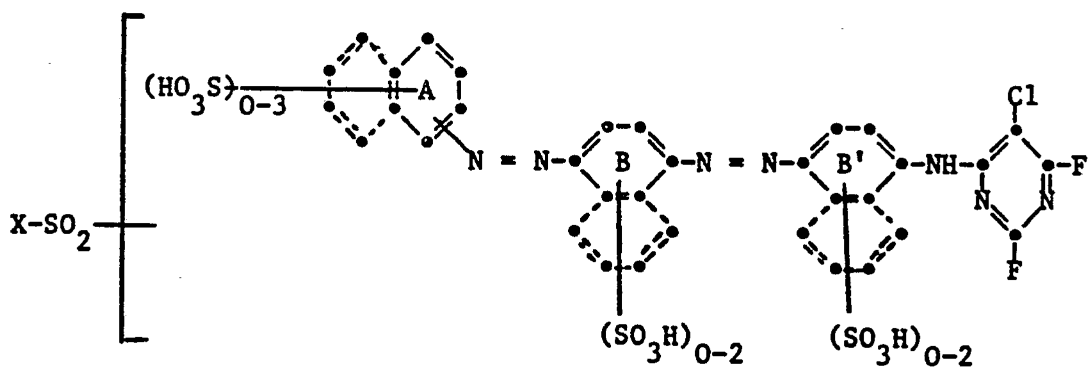

(2),

worin X die für Anspruch 2 geltende Bedeutung hat, und die Benzol- bzw. Naphthalinringe A, B und B' unabhängig voneinander gegebenenfalls weitersubstituiert sind.

4. Reaktivfarbstoffe gemäss Anspruch 3, worin X die Vinyl- oder ß-Sulfatoäthyl-Gruppe ist.

5. Verfahren zur Herstellung von Reaktivfarbstoffen gemäss Anspruch 1, dadurch gekennzeichnet, dass man Farbstoffe der Formel

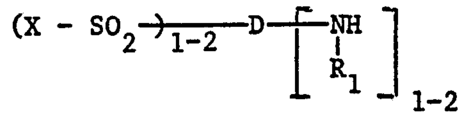

(3) ,

worin D, $R_1$ und X die in Anspruch 1 angegebenen Bedeutungen haben, oder ihre Vorprodukte mit 2,4,6-Trifluor-5-chlorpyrimidin zu Reaktivfarbstoffen der Formel (1) umsetzt, oder die erhaltenen Zwischenprodukte in die gewünschten Endfarbstoffe überführt, und gegebenenfalls eine weitere ·Umwandlungsreaktion anschliesst.

6. Verwendung der Reaktivfarbstoffe gemäss Anspruch 1, zum Färben oder Bedrucken von cellulosehaltigen Fasermaterialien.

7. Verwendung gemäss Anspruch 6, zum Färben oder Bedrucken von Baumwolle.

**Claims**

1. Reactive dyes of the formula

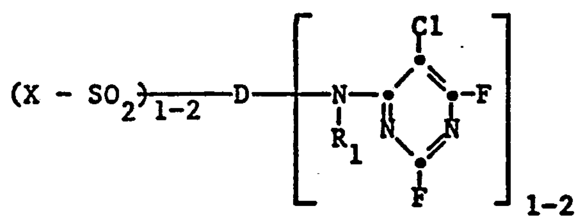

(1)

in which D is the radical of a secondary disazo dye or of a metal complex azo dye derived therefrom, $R_1$ is hydrogen or a substituted or unsubstituted $C_{1-4}$-alkyl radical, and X is a vinyl, ß-sulfatoethyl, ß-thiosulfatoethyl, ß-chloroethyl or ß-acetoxyethyl group.

2. Reactive dyes according to Claim 1, of the formula

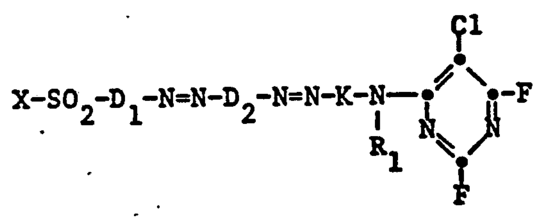

(1a)

in which $R_1$ and X are as defined in Claim 1, and $D_1$ and $D_2$ are the radical of a diazo component each, and K is the radical of a coupling component.

3. Reactive dyes according to Claim 2, of the formula

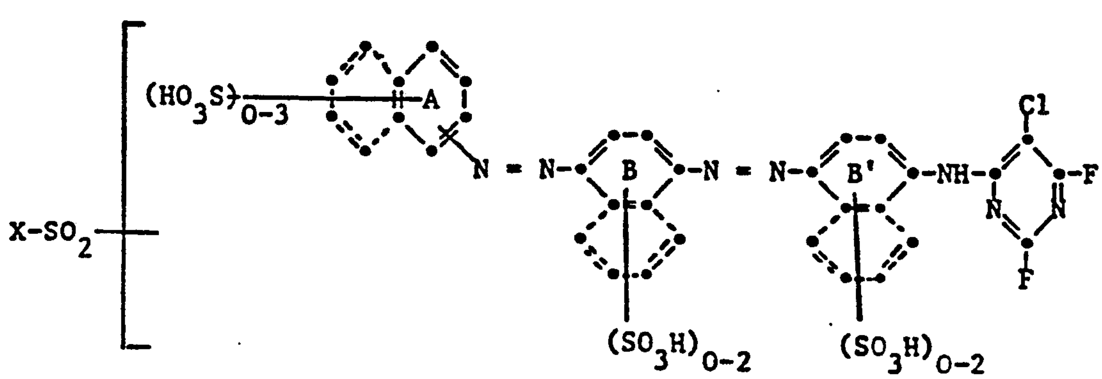

(2)

in which X is as defined for Claim 2, and the benzene or naphthalene rings A, B and B' can be further substituted, independently of one another.

4. Reactive dyes according to Claim 3, in which X is a vinyl or ß-sulfatoethyl group.

5. Process for preparing reactive dyes according to Claim 1, characterized in that dyes of the formula

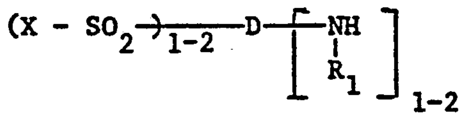

(3)

in which D, $R_1$ and X are as defined in Claim 1, or precursors thereof, are reacted with 2,4,6-trifluoro-5-chloropyrimidine to give reactive dyes of the formula (1), or the intermediates obtained are converted into the desired end dyes, and if desired a further conversion reaction is carried out subsequently.

6. Use of the reactive dyes according to Claim 1, for dyeing or printing cellulose-containing fibre materials.

7. Use according to Claim 6, for dyeing or printing cotton.

## Revendications

1. Colorants réactifs de formule

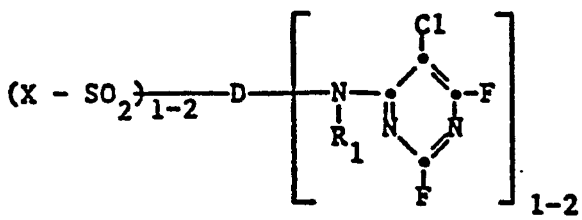

(1) ,

où D est le radical d'un colorant disazoïque ou d'un colorant azoïque à complexe métallique qui en est dérivé, $R_1$ est un hydrogène ou un radical alcoyle en $C_1$ à $C_4$ éventuellement substitué, et X est le groupe vinyle, ß-sulfatoéthyle, ß-thiosulfatoéthyle, ß-chloroéthyle ou ß-acétoxyéthyle.

2. Colorants réactifs selon la revendication 1, de formule

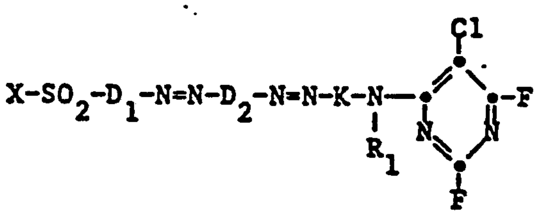

(1a) ,

où $R_1$ et X ont les significations données dans la revendication 1, et $D_1$ et $D_2$ représentent chacun le radical d'un composant diazo, et K est le radical d'un composant de copulation.

3. Colorants réactifs selon la revendication 2, de formule

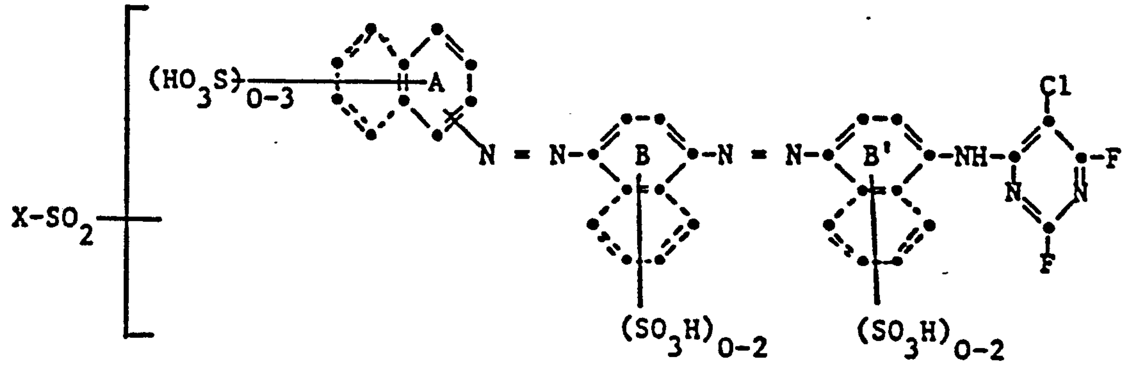

(2),

où X a la signification valant pour la revendication 2, et les noyaux benzène ou selon les cas naphtalène A, B et B' sont éventuellement substitués davantage indépendamment l'un de l'autre.

4. Colorants réactifs selon la revendication 3, où X est le groupe vinyle ou ß-sulfatoéthyle.

5. Procédé de préparation de colorants réactifs selon la revendication 1, caractérisé en ce qu'on transforme des colorants de formule

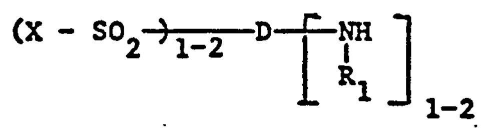

(3) ,

où D, $R_1$ et X ont les significations données dans la revendication 1, ou leurs précurseurs avec la 2,4,6-trifluoro-5-chloropyrimidine en les colorants réactifs de formule (1), ou en ce qu'on transforme les produits intermédiaires obtenus en les colorants finals désirés, et éventuellement en ce qu'on ajoute une autre réaction de transformation.

6. Application des colorants réactifs selon la revendication 1 à la teinture ou à l'impression de matières fibreuses contenant de la cellulose.

7. Application selon la revendication 6 à la teinture ou à l'impression de coton.